# FASCICULE DE BREVET EUROPEEN

(11) **EP 1 977 148 B1**
(45) Date de publication et mention de la délivrance du brevet: **22.08.2012**
(21) Numéro de dépôt: 07730846.8
(22) Date de dépôt: 23.01.2007
(51) Int. Cl.: F16K 31/383

(54) **DISPOSITIF DE COMMANDE HYDRAULIQUE**
HYDRAULISCHE STEUERVORRICHTUNG
HYDRAULIC CONTROL DEVICE

(30) Priorité: 24.01.2006 FR 0600610
(43) Date de publication de la demande: 08.10.2008
(73) Titulaire: Sanitaire Accessoires Services - S.A.S., 69720 Saint Laurent de Mure (FR)
(72) Inventeur: OURY, Jean-Claude, F-38440 Artas (FR)
(74) Mandataire: Sonnenberg, Fred
(86) Numéro de dépôt international: PCT/FR2007/000127
(87) Numéro de publication internationale: WO 2007/085723

(56) Documents cités:
- EP-A- 1 197 607
- EP-A- 1 607 531
- FR-A- 2 819 835
- US-A- 2 838 765
- US-A- 4 230 145
- US-B1- 6 321 395

## Description

La présente invention a pour objet un dispositif de commande hydraulique.

Des dispositifs de commande hydrauliques sont utilisés pour commander des mécanismes de vidage. L'invention est bien adaptée, bien qu'elle n'y soit pas limitée, à la commande d'un mécanisme de chasse d'eau sanitaire.

Les dispositifs de commande connus pour commander des mécanismes de chasse d'eau utilisent généralement des systèmes de transmission à tige ou à câble ou pneumatique. Les systèmes de transmission à tige présentent l'inconvénient d'être difficiles à régler. Les systèmes de transmission à câble présentent l'inconvénient qu'ils imposent de respecter des tolérances difficiles à tenir. Les systèmes de transmission pneumatiques présentent l'inconvénient d'un mauvais confort d'utilisation. Tous ces systèmes imposent par ailleurs une pression importante sur le ou les bouton(s) de commande pour déclencher le vidage. D'après le document US-A-4 230 145 on connaît un dispositif de commande hydraulique pour commander un mécanisme d'évacuation d'eau, ledit dispositif de commande hydraulique comportant une unité de commande à poussoir, une unité de pilotage solidarisable à l'unité de commande, une vanne hydraulique étant contrôlée hydrauliquement par l'unité de pilotage, un vérin hydraulique à simple effet et alimenté en eau par ladite vanne hydraulique, ledit vérin assurant le soulèvement d'une soupape de fermeture d'un réservoir dudit mécanisme de distribution d'eau pour permettre le vidage dudit réservoir.

On connaît aussi d'après le document US 2 838 765, un dispositif d'évacuation et de remplissage d'eau, comprenant une commande mécanique fonctionnant manuellement et agissant directement sur une vanne hydraulique dudit dispositif.

Ce dispositif présente également l'inconvénient d'imposer une pression importante sur le ou les boutons de commande et d'être inesthétique.

La présente invention a pour but de proposer un dispositif de commande hydraulique qui évite au moins certains des inconvénients précités et qui permette de limiter la pression qu'un utilisateur doit exercer sur le ou les poussoir(s) pour déclencher le vidage.

A cet effet, l'invention a pour objet un dispositif de commande hydraulique selon la revendication 1.

La vanne hydraulique comporte une voie d'entrée, destinée à être reliée audit réseau de distribution d'eau, une voie de sortie, destinée à être reliée à la chambre dudit vérin hydraulique, et une voie d'échappement, ladite vanne hydraulique comportant un clapet mobile entre une première position, dans laquelle il permet la circulation d'eau depuis ladite voie de sortie vers ladite voie d'échappement, et une deuxième position, dans laquelle il permet la circulation d'eau depuis ladite voie d'entrée vers ladite voie de sortie, ledit vérin hydraulique étant apte à assurer le soulèvement de ladite soupape de fermeture ou bonde lorsque ledit clapet est dans ladite deuxième position.

De préférence, ladite voie d'entrée alimente par le biais d'un calibreur une voie de commande de ladite vanne hydraulique, ladite voie de commande étant destinée à être connectée à un tuyau de commande dudit dispositif de commande hydraulique, ledit poussoir étant mobile entre une position de repos, dans laquelle de l'eau contenue dans ledit tuyau de commande est apte à exercer sur ledit clapet une pression suffisante pour maintenir ledit clapet dans la première position, et une position d'actionnement, dans laquelle au moins une partie de l'eau contenue dans ledit tuyau de commande est évacuée dudit tuyau de commande pour permettre le déplacement dudit clapet vers la deuxième position.

Avantageusement, ledit dispositif de commande comporte une tige de commande, ledit poussoir présentant un prolongement en appui sur une extrémité de la tige de commande, ladite tige de commande étant sollicitée élastiquement vers une position de repos correspondant à la position de repos dudit poussoir, ladite tige de commande étant solidaire en translation d'un clapet d'actionnement, ledit clapet d'actionnement étant disposé de manière à empêcher l'évacuation d'eau depuis un passage débouchant dans ledit tuyau de commande lorsque ladite tige de commande est dans la position de repos et à permettre l'évacuation d'eau depuis ledit passage lorsque ladite tige de commande est dans ladite position d'actionnement.

De préférence, ladite voie de commande débouche dans un premier évidement d'un corps de vanne de ladite vanne hydraulique, une membrane élastique étant disposée dans l'évidement de manière à séparer la voie de commande des voies d'entrée, de sortie et d'échappement, une extrémité dudit calibreur étant logée dans un orifice de ladite membrane.

Selon un mode de réalisation de l'invention, ledit clapet est solidaire du calibreur, le clapet étant mobile dans un deuxième évidement du corps de vanne dans lequel débouchent les voies d'entrée, de sortie et d'échappement, le clapet étant, dans la première position, en appui sur un premier rebord de manière à empêcher la circulation d'eau entre la voie d'entrée et ledit deuxième évidement, et, dans la deuxième position, en appui sur un deuxième rebord de manière à empêcher la circulation d'eau entre ledit deuxième évidement et la voie d'échappement.

Selon un mode de réalisation de l'invention, ledit dispositif de commande hydraulique est utilisé pour commander un mécanisme de chasse d'eau sanitaire.

Avantageusement, ledit mécanisme de chasse d'eau est un mécanisme double chasse, ledit dispositif de commande hydraulique comportant une deuxième vanne hydraulique à trois voies alimentée par ledit réseau de distribution d'eau et contrôlée par ladite unité de pilotage, l'unité de commande comportant deux poussoirs commandant chacun une des vannes hydrauliques, ledit dispositif de commande hydraulique comportant un deuxième vérin hydraulique à simple effet, alimenté par l'intermédiaire de ladite deuxième vanne et assurant le déclenchement dudit mécanisme d'évacuation d'eau par soulèvement de ladite soupape de fermeture, ledit deuxième vérin comportant un piston dont la course est différente de la course du piston dudit vérin, de manière que la soupape de fermeture soit soulevée d'une hauteur différente lorsqu'elle est soulevée par ledit deuxième vérin et lorsqu'elle est soulevée par ledit vérin.

Selon un mode de réalisation de l'invention, ledit dispositif de commande hydraulique est utilisé pour commander un mécanisme de vidage d'un bac, tel qu'une baignoire, un lavabo, un bidet ou un évier.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
la figure 1 est une vue schématique simplifiée d'un dispositif de commande hydraulique selon un mode de réalisation de l'invention ;
la figure 2 est une vue schématique simplifiée en coupe longitudinale de l'unité de commande et de l'unité de pilotage du dispositif de commande hydraulique de la figure 1 ;
la figure 3 est une vue schématique simplifiée en coupe longitudinale de la vanne du dispositif de commande hydraulique de la figure 1 ;
la figure 4 est une vue avant schématique simplifiée d'un mécanisme de chasse d'eau commandé par le dispositif de commande hydraulique de la figure 1 ;
la figure 5 est une vue latérale schématique simplifiée du mécanisme de chasse d'eau de la figure 4 ;
la figure 6 est une vue schématique simplifiée du mécanisme de chasse d'eau de la figure 4 en coupe selon la ligne VI-VI ;
la figure 7 est une vue schématique simplifiée en coupe longitudinale d'un raccord de tuyau du dispositif de commande hydraulique ;
la figure 8 est une vue similaire à la figure 1, un poussoir du dispositif de commande hydraulique étant en position d'actionnement ;
la figure 9 est une vue similaire à la figure 4, montrant le mécanisme de chasse d'eau lorsqu'il est commandé par le poussoir ;
la figure 10 est une vue du mécanisme de chasse d'eau de la figure 9 en coupe selon la ligne X-X ;
la figure 11 est une vue similaire à la figure 4, montrant le mécanisme de chasse d'eau lorsqu'il est commandé par un deuxième poussoir du dispositif de commande hydraulique ; et
la figure 12 est une vue du mécanisme de chasse d'eau de la figure 11 en coupe selon la ligne XII-XII.

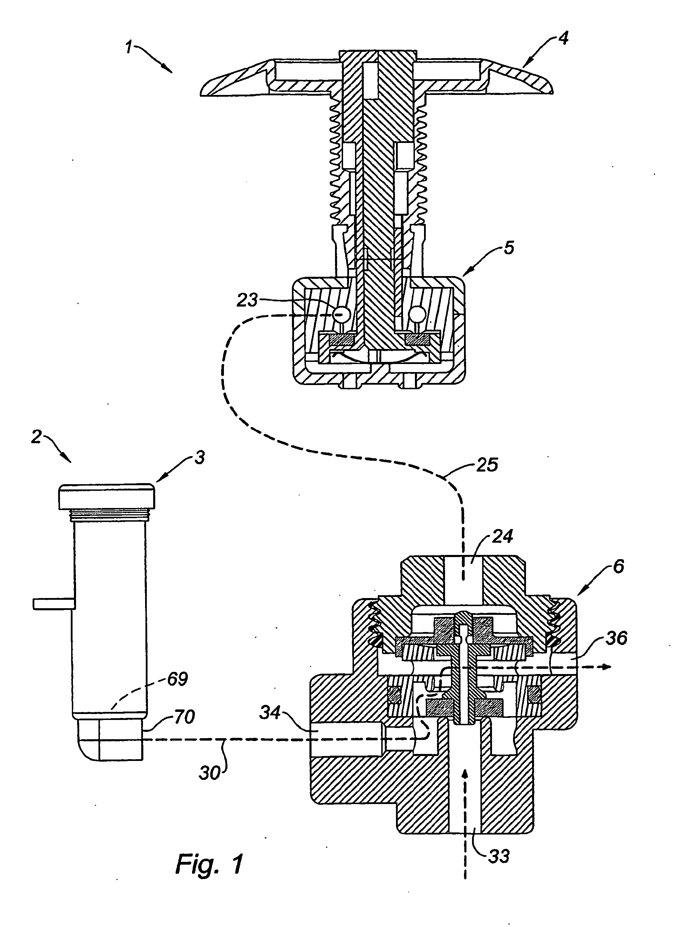

En se référant à la figure 1, on voit un dispositif de commande hydraulique 1 qui permet de commander un mécanisme de chasse d'eau 2. Sur la figure 1, seul un vérin hydraulique à simple effet 3 du mécanisme de chasse d'eau 2 a été représenté. Le dispositif de commande 1 comporte une unité de commande 4, une unité de pilotage 5 et une vanne 6.

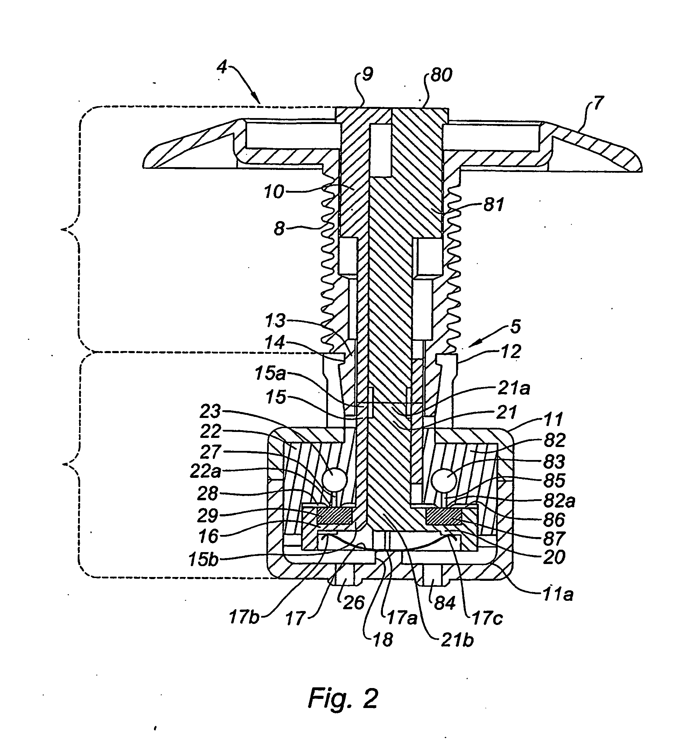

En se référant à la figure 2, on va maintenant décrire plus en détail l'unité de commande 4 et l'unité de pilotage 5.

L'unité de commande 4 comprend une rosace 7 logée dans un orifice d'un couvercle ou d'un réservoir (non représenté) de la chasse d'eau et vissée, par une saillie filetée 8, sur un écrou (non représenté) de la chasse d'eau. Une telle rosace est connue en soi.

L'unité de commande 4 comprend un poussoir 9 comportant un prolongement axial 10 apte à coulisser dans la saillie filetée 8. Selon une variante d'exécution non représentée, le poussoir 9 peut être actionné via un bouton poussoir , une membrane souple ou une autre pièce d'habillage.

L'unité de pilotage 5 comprend un boîtier 11 comportant un col 12, qui a par exemple une forme sensiblement cylindrique. Le col 12 présente une excroissance annulaire 13, faisant saillie radialement vers l'intérieur. L'excroissance 13 est apte coopérer avec une rainure annulaire 14 d'encliquetage de la saillie filetée 8. La rosace 7 est ainsi insérée dans le col 12 par déformation élastique puis encliquetage.

A l'intérieur du boîtier 11 est logée une tige de commande 15. La tige de commande 15 comporte une extrémité 15a en appui contre le bord inférieur du prolongement 10. L'extrémité opposée 15b de la tige de commande 15 comporte un coude 16 qui s'étend vers la périphérie du boîtier 11.

Une lame 17 formant ressort est disposée entre la face inférieure 11a du boîtier 11 et le coude 16 pour solliciter la tige 15, donc le prolongement 10, vers une position de repos dans laquelle le poussoir 9 fait saillie de la rosace 7. La lame 17 est par exemple réalisée en acier ou en plastique. La partie centrale 17a de la lame 17 est en appui, dans le mode de réalisation représenté, sur une excroissance 18 de la face inférieure 11a du boîtier 11. Une extrémité 17b de la lame 17 est en appui sur le coude 16. L'extrémité opposée 17c de la lame 17 est en appui sur un coude 20 d'une tige de commande 21 dont la fonction sera décrite en détail plus loin.

L'unité de pilotage 5 comprend un support de siège 22 portant un siège 22a. Le support de siège 22 comporte un passage 23. Le passage 23 est relié à une voie de commande 24 (figure 1) de la vanne 6 par un tuyau de commande 25, qui est symbolisé par des traits interrompus sur la figure 1. Le passage 23 est apte à communiquer avec un trou d'évacuation 26 de la face inférieure 11a du boîtier 11 par le biais d'une rainure 27, qui débouche dans le siège 22a. Le trou d'évacuation 26 débouche par exemple dans un réservoir (non représenté) de la chasse d'eau.

Le coude 16 comporte un évidement 28, disposé au droit de la rainure 27, dans lequel est emboîté un clapet 29. En position de repos, la lame 17 maintient le coude 16 en position haute. Dans cette position, le clapet 29 est en appui contre la rainure 27 et bloque la communication entre le passage 23 et le trou d'évacuation 26.

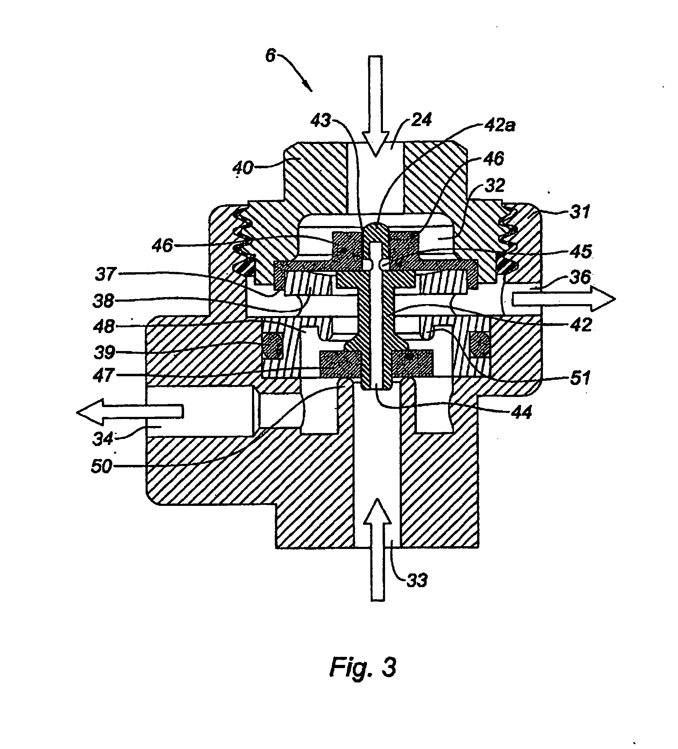

En se référant à la figure 3, on va maintenant décrire plus en détail la vanne 6:

La vanne 6 comporte un corps de vanne 31. La voie de commande 24 débouche dans un évidement 32 du corps de vanne 31.

La vanne 6 comporte une voie d'entrée 33 reliée à des moyens d'alimentation en eau (non représentés). La vanne 6 comporte une voie de sortie 34 reliée à une chambre 69 (figure 1) du vérin 3 par un tuyau 30, qui est symbolisé par des traits interrompus sur la figure 1. La vanne 6 comporte une voie d'échappement 36, qui débouche par exemple dans le réservoir de la chasse d'eau.

Une membrane élastique 37 est disposée dans l'évidement 32 de manière à séparer la voie de commande 24 des voies d'entrée 33, de sortie 34 et d'échappement 36. La membrane 37 est en appui sur une bague d'échappement 38, ajustée dans le corps de vanne 31. Un joint torique 39 permet d'assurer l'étanchéité entre le corps de vanne 31 et la bague d'échappement 38. Un bouchon 40, vissé sur le corps de vanne 31, permet de maintenir la membrane 37 en position contre la bague d'échappement 38.

Un calibreur 42, de forme globalement cylindrique, est disposé entre la voie de commande 24 et la voie d'entrée 33, une extrémité 42a du calibreur 42 étant logée dans un orifice central 43 de la membrane 37.

Le calibreur 42 est percé d'un trou longitudinal 44 non débouchant du côté de l'extrémité 42a. Le trou 44 est traversé perpendiculairement par un trou 45. Deux rainures 46, par exemple de section triangulaire, débouchent dans le trou 45. Le passage entre les rainures 46 et la membrane 37 est ainsi calibré pour réduire fortement le débit entre la voie d'entrée 33 et la voie de commande 24.

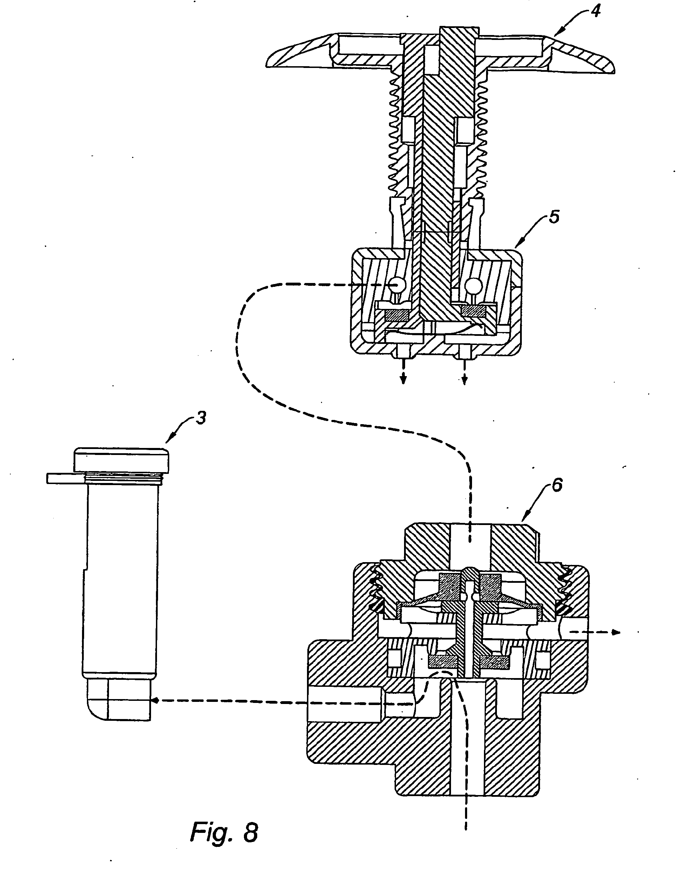

La vanne 6 comporte un clapet 47, solidaire du calibreur 42. Le clapet 47 est mobile dans un évidement 48 du corps de vanne 31, entre une première position, représentée sur les figures 1 et 3, et une deuxième position, représentée sur la figure 8. Les voies d'entrée 33, de sortie 34 et d'échappement 36 débouchent dans l'évidement 48. Dans la première position, le clapet 47 est en appui sur le rebord 50 de la voie d'entrée 33 et empêche la circulation d'eau entre la voie d'entrée 33 et l'évidement 48. Dans cette position, le clapet 47 est écarté d'un rebord 51 de la bague d'échappement 38, et la circulation d'eau est possible entre la voie de sortie 34 et la voie d'échappement 36. Dans la deuxième position, le clapet 47 est en appui sur le rebord 51 et empêche la circulation d'eau entre l'évidement 48 et la voie d'échappement 36. Dans cette position, le clapet 47 est écarté du rebord 50 et la circulation d'eau est possible entre la voie d'entrée 33 et la voie de sortie 34.

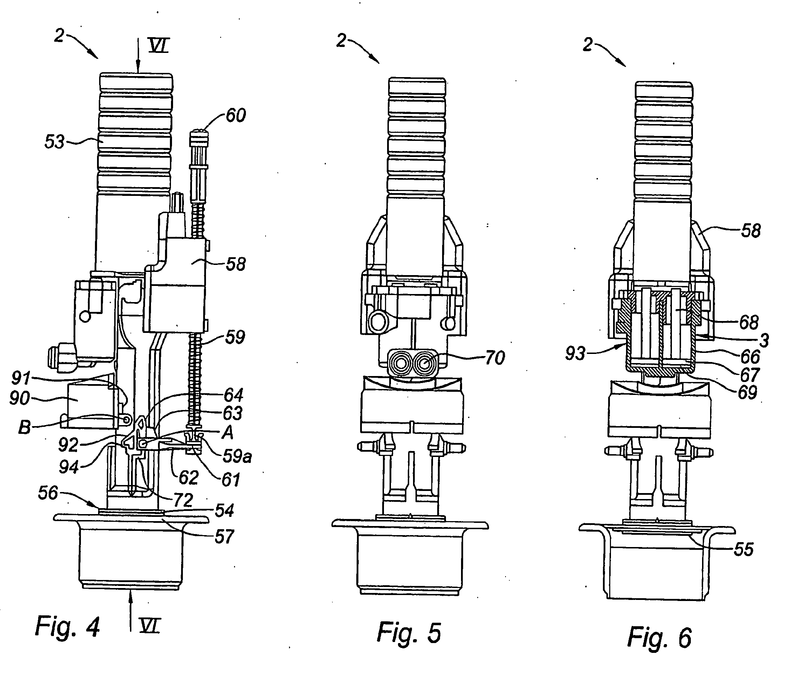

En se référant aux figures 4 à 6, on va maintenant décrire plus en détail le mécanisme de chasse d'eau 2.

Le mécanisme de chasse 2 comprend un tube de trop-plein 53 monté en translation dans une enveloppe (non représentée). Le tube de trop-plein 53 porte, à son extrémité inférieure, une tête 54 munie d'un joint plat 55 d'étanchéité périphérique, qui forment une soupape de fermeture 56, coopérant avec un culot 57.

Lorsque la soupape de fermeture 56 est écartée du culot 57, l'eau contenue dans le réservoir de la chasse d'eau s'écoule dans une cuvette (non représentée) de toilettes.

Le mécanisme de chasse 2 comporte un flotteur 58, monté sur une vis micrométrique 59 de réglage fin en hauteur qui ajuste la quantité d'eau délivrée. La vis 59 comporte une tête de vissage supérieure 60 et son extrémité inférieure 59a est munie d'une rotule d'articulation 61 d'un levier 62 dont l'extrémité opposée à la rotule 61 est articulée autour d'un axe A fixe par rapport à l'enveloppe. Le levier 62 porte un ergot 63 qui coopère avec une came 64 portée par le tube de trop-plein 53, d'une manière qui sera décrite en détail plus loin.

Le vérin. 3 comporte un corps 66 et un piston 67, le piston 67 étant fixé à une tige 68. Le corps 66 définit, en coopération avec le piston 67, une chambre 69. La chambre 69 comporte un orifice d'alimentation 70 reliée à la voie de sortie 34 de la vanne 6 par le tuyau 30. La tige 68 est couplée au trop-plein 53. Le piston 67 est sollicité par un ressort (non représenté) dans une direction tendant à réduire le volume de la chambre 69, c'est-à-dire vers le bas sur les figures.

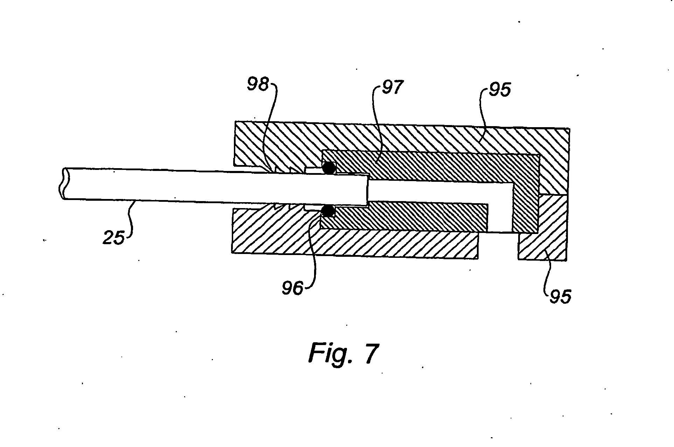

En se référant à la figure 7, on va maintenant décrire plus en détail le raccordement des tuyaux 25 et 30. Les tuyaux 25 et 30 sont des tuyaux souples de type pneumatique. Les moyens permettant le maintien mécanique et l'étanchéité des tuyaux 25 et 30 sont intégrés dans l'unité de pilotage 5, la vanne 6 et le vérin 3, respectivement. Le maintien mécanique est assuré par deux demi-coquilles 95 qui pincent le tuyau 25, 30, respectivement. Les demi-coquilles 95 comportent des cannelures 98 pour maintenir le tuyau 25, 30, respectivement, en position. Une pièce 97 de canalisation de l'eau est disposée à l'intérieur des demi-coquilles 95. Un joint torique 96 assure l'étanchéité entre le tuyau 25, 30, respectivement, et la pièce 97.

On va maintenant décrire une opération de commande du mécanisme de chasse 2 par le dispositif de commande 1.

En position de repos (figures 1 à 6), le poussoir 9 est en position haute, c'est à dire qu'il fait saillie de la rosace 7.

Dans cette position, le clapet 29 est maintenu contre la rainure 27 par la lame 17 et empêche la circulation d'eau entre le passage 23 et le trou d'évacuation 26. Le diamètre de fermeture est par exemple d'environ 0.6 mm. Pour garantir l'étanchéité à une pression d'épreuve d'environ 16 bars, la lame 17 exerce par exemple sur le clapet 28, par le biais du coude 16, une pression équivalente à 200 à 300g.

Dans cette position, l'eau contenue dans le tuyau de commande 25, qui est alimenté le biais du calibreur 42, exerce une pression sur le dessus de la membrane 37. Cela a pour effet de maintenir le clapet 47, par le biais du calibreur 42, dans la première position. La chambre 69 est sensiblement vide et le piston 67 est maintenu élastiquement en position basse.

En partant de cette position, lorsqu'un utilisateur appuie sur le poussoir 9, de manière à déplacer le poussoir 9 jusqu'à une position d'actionnement dans laquelle le poussoir se trouve sensiblement dans le plan de la rosace 7 (figure 8), cela a pour effet de décoller le clapet 29 de la rainure 27 en comprimant la lame 17. Le clapet 29 est par exemple décollé de la rainure d'environ 1 à 1.5 mm. Dans cette position, l'eau contenue dans le tuyau de commande 25 s'évacue par le trou d'évacuation 26 et la pression exercée sur le dessus de la membrane 37 diminue. Le clapet 47 et le calibreur 42 sont déplacés vers le haut par la pression dans la voie d'entrée, jusqu'à la deuxième position du clapet 47 (figure 8). Dans cette position, la chambre 69 du vérin 3 est remplie par la voie de sortie 34, alimentée par la voie d'entrée 33. Le piston 67 et la tige 68 coulissent dans le corps de vérin 66, vers le haut, ce qui a pour effet de déplacer vers le haut le tube de trop-plein 53, ce qui entraîne l'ouverture de la soupape 56. La soupape 56 est par exemple écartée du siège de culot 57 d'une hauteur d'environ 20 mm.

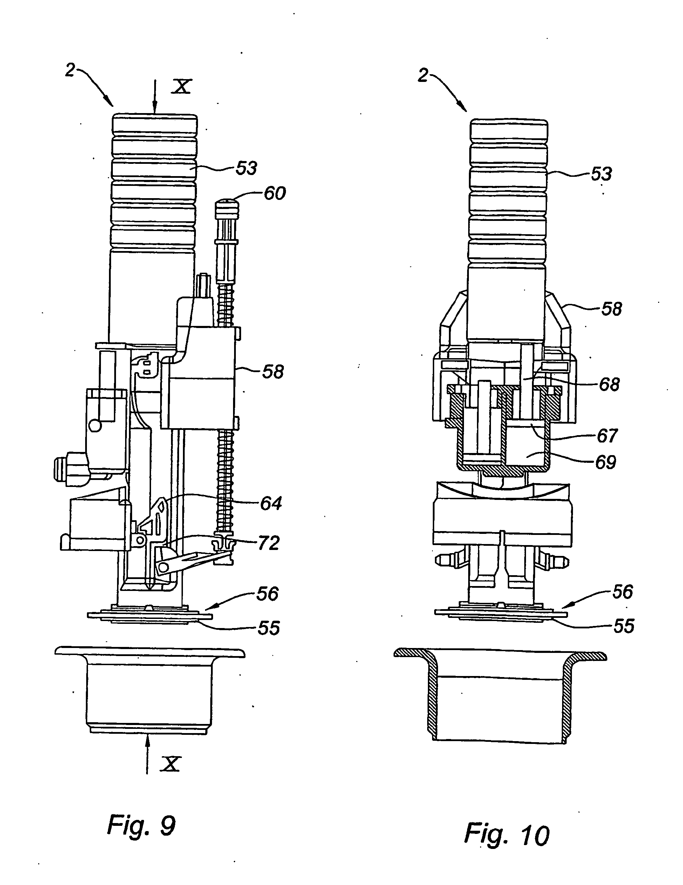

Simultanément, la came 64 glisse sur l'ergot 63 du levier 62 jusqu'à ce que l'ergot 63 vienne se loger sous un épaulement 72 formé par cette came 64 (figures 9 et 10). Le basculement du levier 62 est assuré par le flotteur 58 qui sollicite la vis 59 vers le haut.

Lorsque l'utilisateur relâche le poussoir 9, le clapet 29, sollicité par la lame 17, se déplace jusqu'à se trouver en appui contre le siège 22a. Dans cette position, le clapet 29 est appuyé contre la rainure 27 et empêche la circulation d'eau entre le passage 23 et le trou d'évacuation 26. La pression de l'eau contenue dans le tuyau de commande 25 augmente, ce qui a pour effet de déformer la membrane 37. Le clapet 47 est déplacé jusqu'à la première position. Dans cette position, le clapet 47 empêche la circulation entre la voie d'entrée 33 et la voie de sortie 34 mais permet la circulation entre la voie de sortie 34 et la voie d'échappement 36. Cela permet à l'eau contenue dans la chambre 69 du vérin 3 de s'écouler dans le réservoir de la chasse d'eau. Cet écoulement se termine lorsque la chambre 69 est vide, ce qui correspond à une position basse du piston 67.

Le flotteur 58 verrouille le tube de trop-plein 53 et le libère consécutivement à la descente du niveau de l'eau dans le réservoir. Le flotteur 58 en descendant fait pivoter le levier 62. L'ergot 63 échappe alors à l'épaulement 72 et le tube de trop-plein 53 retombe librement en interrompant le vidage.

Ainsi, pour déclencher le mécanisme de chasse d'eau 2, l'utilisateur doit uniquement exercer une force permettant de déplacer le clapet 29. Dans ce cas, la pression dans le réseau d'eau permet de soulever le trop-plein 53. En d'autres termes, lorsque l'utilisateur exerce une force relativement faible sur le poussoir 9, la pression dans le réseau d'eau est utilisée pour générer une force plus importante permettant de déclencher le mécanisme de chasse 2. La pression dans le réseau d'eau permet donc d'assister la commande du mécanisme de chasse d'eau. Le dispositif de commande 1 permet ainsi de réduire l'effort et la course du poussoir 9 et de simplifier la transmission au mécanisme de chasse 2. La liaison du poussoir 9 au mécanisme de chasse 2 est très souple et peut être très longue, ce qui facilite la mise en place du dispositif de commande 1.

La course du poussoir 9 est par exemple d'environ 1.5 mm. Du fait que la course est faible, le diamètre du poussoir 9 n'est plus obligé d'être inscrit dans le trou, typiquement de diamètre égal à 40 mm, du couvercle de réservoir. Il est ainsi possible de conserver une rosace plate sur un très grand diamètre, laissant ainsi beaucoup plus de place pour les doigts. Cela permet un grand choix de réalisation de l'ensemble rosace poussoir. Par exemple, l'ensemble rosace poussoir peut être enveloppé d'une enveloppe souple étanche portant sur le dessus un relief symbolisant la position du poussoir. Une autre possibilité consiste à utiliser un clavier souple en couleur du type clavier de commande électronique.

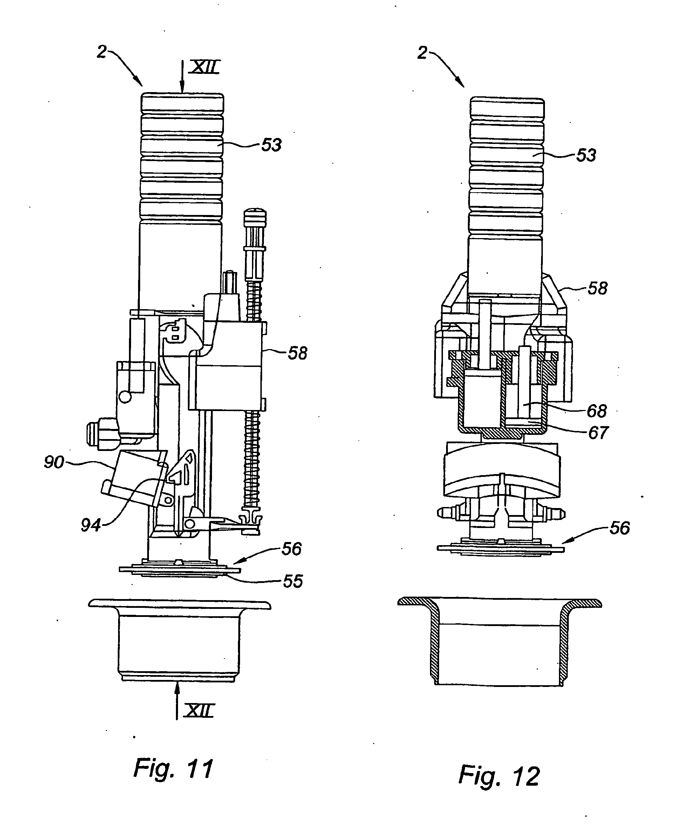

Le mécanisme de chasse d'eau 2 représenté sur les figures 1 à 12 est un mécanisme dit double chasse, c'est à dire qu'il permet l'évacuation, au choix de l'utilisateur, de deux volumes d'eau différents.

Le poussoir 9 est un poussoir dit de petite chasse. L'unité de commande 4 comporte un deuxième poussoir 80, dit de grande chasse, comportant un prolongement axial 81 apte à coulisser dans la saillie filetée 8.

La tige de commande 21 comporte une extrémité 21a en appui contre le bord inférieur du prolongement 81. L'extrémité opposée 21b de la tige de commande comporte un coude 20 qui s'étend vers la périphérie du boîtier 11.

L'unité de pilotage 5 comprend un deuxième support de siège 82 portant un siège 82a. Le support de siège 82 comporte un passage 83. Le passage 83 est relié à une voie de commande d'une deuxième vanne (non représentée) par un tuyau de commande (non représenté). Le passage 83 est apte à communiquer avec un trou d'évacuation 84 de la face inférieure 11a du boîtier 11 par le biais d'une rainure 85, qui débouche dans le siège 82a. Le trou d'évacuation 84 débouche par exemple dans le réservoir de la chasse d'eau.

Le coude 20 comporte un évidement 86, disposé au droit de la rainure 85, dans lequel est emboîté un clapet 87. En position de repos, la lame 17 maintient le coude 20 contre le siège 82a. Dans cette position, le clapet 87 est en appui contre la rainure 85 et bloque la communication entre le passage 83 et le trou d'évacuation 84.

La vanne associée au poussoir de grande chasse 80 est similaire à la vanne 6.

Le mécanisme de chasse 2 comprend un flotteur de grande chasse 90, apte à pivoter autour d'un axe B fixe par rapport à l'enveloppe, qui est monté sur un côté sensiblement diamétralement opposé au flotteur de petite chasse 58 par rapport au tube de trop-plein 53. Le flotteur 90 est disposé plus bas que le flotteur 58. Le flotteur 90 est muni d'un ergot 91 qui coopère avec une came 92 portée par le tube de trop-plein 53. L'ergot 63 est disposé plus bas que l'ergot 91.

Le mécanisme de chasse 2 comporte un deuxième vérin 93, similaire au vérin 3. La course du piston de grande-chasse est plus grande que la course du piston de petite-chasse 68, de manière que le piston grande-chasse soit apte à déplacer la soupape 56 d'une plus grande hauteur.

Une opération de commande du mécanisme de chasse 2 par un appui sur le poussoir 80 est similaire à une opération de commande du mécanisme de chasse 2 par un appui sur le poussoir 9.

Dans ce cas, l'ergot 91 vient se loger sous un épaulement 94 de la came 92, de sorte que le flotteur de grande chasse 90 verrouille le tube de trop-plein 53. Le tube de trop-plein 53 est déplacé jusqu'à une position plus haute de vidage, qui correspond à un vidage grande chasse. La soupape 56 est par exemple écartée du siège de culot 57 d'une hauteur d'environ 26 mm. Comme précédemment, le tube de trop-plein 53 n'est libéré que lorsque le niveau de l'eau dans le réservoir libère le flotteur 90, lequel, en pivotant, écarte l'ergot 91 de la came 92. Le tube de trop plein 53 retombe alors brusquement en position d'obturation, la quantité d'eau vidée correspondant à la grande chasse.

D'autres variantes sont possibles. Par exemple, le dispositif de commande 1 peut être utilisé pour commander le vidage d'un évier, à un ou deux bacs, d'une baignoire, d'un lavabo, d'un bidet, ou de tout autre appareil sanitaire nécessitant un mécanisme déclenchable d'évacuation d'eau..

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre des revendications annexées.

## Revendications

1. Dispositif de commande hydraulique (1) pour commander un mécanisme d'évacuation d'eau (2), ledit dispositif de commande hydraulique comportant une unité de commande (4) à poussoir(s), comportant :
- une unité de pilotage (5) solidarisable à l'unité de commande,
- au moins une vanne hydraulique (6) à trois voies, dont une voie d'entrée (33) alimentée par un réseau de distribution d'eau, une voie de sortie (34) destinée à être reliée à la chambre (69) d'au moins un vérin hydraulique (3) et une voie d'échappement (36), ladite vanne hydraulique (6) étant contrôlée hydrauliquement par l'unité de pilotage (5),
- ledit au moins un vérin hydraulique (3) étant à simple effet et assurant le soulèvement d'une soupape de fermeture (56) d'un réservoir dudit mécanisme de distribution d'eau pour permettre le vidage dudit réservoir.

2. Dispositif de commande hydraulique selon la revendication 1, **caractérisé en ce que** ladite vanne hydraulique (6) comporte un clapet (47) mobile entre une première position, dans laquelle il permet la circulation d'eau depuis ladite voie de sortie (34) vers ladite voie d'échappement (36), et une deuxième position, dans laquelle il permet la circulation d'eau depuis ladite voie d'entrée (33) vers ladite voie de sortie (34), ledit vérin hydraulique (3) étant apte à assurer le soulèvement de ladite soupape de fermeture ou bonde lorsque ledit clapet est dans ladite deuxième position.

3. Dispositif de commande hydraulique selon la revendication 2, **caractérisé en ce que** ladite voie d'entrée (33) alimente par le biais d'un calibreur (42) une voie de commande (24) de ladite vanne hydraulique (6), ladite voie de commande étant destinée à être connectée audit tuyau de commande (25) dudit dispositif de commande hydraulique, ledit bouton poussoir (9, 15) étant mobile entre une position de repos, dans laquelle de l'eau contenue dans ledit tuyau de commande est apte à exercer sur ledit clapet (47) une pression suffisante pour maintenir ledit clapet dans la première position, et une position d'actionnement, dans laquelle au moins une partie de l'eau contenue dans ledit tuyau de commande (25) est évacuée dudit tuyau de commande pour permettre le déplacement dudit clapet (47) vers la deuxième position.

4. Dispositif de commande hydraulique selon la revendication 3, **caractérisé en ce qu'**il comporte une tige de commande (15), ledit bouton poussoir présentant un prolongement (10) en appui sur une extrémité (15a) de la tige de commande, ladite tige de commande étant sollicitée élastiquement vers une position de repos correspondant à la position de repos dudit bouton poussoir, ladite tige de commande étant solidaire en translation d'un clapet d'actionnement (29), ledit clapet d'actionnement étant disposé de manière à empêcher l'évacuation d'eau depuis un passage (23) dans lequel débouche ledit tuyau de commande lorsque ladite tige de commande est dans la position de repos et à permettre l'évacuation d'eau depuis ledit passage lorsque ladite tige de commande est dans ladite position d'actionnement.

5. Dispositif de commande hydraulique selon la revendication 3 ou 4, **caractérisé en ce que** ladite voie de commande (24) débouche dans un premier évidement (32) d'un corps de vanne (31) de ladite vanne hydraulique, une membrane élastique (37) étant disposée dans l'évidement (32) de manière à séparer la voie de commande (24) des voies d'entrée (33), de sortie (34) et d'échappement (36), une extrémité dudit calibreur (42) étant logée dans un orifice (43) de ladite membrane (37).

6. Dispositif de commande hydraulique selon la revendication 5, **caractérisé en ce que** ledit clapet (47) est solidaire du calibreur (42), le clapet (47) étant mobile dans un deuxième évidement (48) du corps de vanne dans lequel débouche la voie d'entrée (33), et qui débouche dans les voies de sortie (34) et d'échappement (36), le clapet (47) étant, dans la première position, en appui sur un premier rebord (50) de manière à empêcher la circulation d'eau entre la voie d'entrée (33) et ledit deuxième évidement (48), et, dans la deuxième position, en appui sur un deuxième rebord (51) de manière à empêcher la circulation d'eau entre ledit deuxième évidement (48) et la voie d'échappement (36).

7. Mécanisme de chasse d'eau (2), **caractérisé en ce qu'**il comprend un dispositif de commande hydraulique selon l'une quelconque des revendications 1 à 6.

8. Mécanisme de chasse d'eau (2), selon la revendication 7 **caractérisé en ce que** ledit mécanisme d'évacuation d'eau (2) est un mécanisme à double chasse, ledit dispositif de commande hydraulique comportant une deuxième vanne hydraulique (6) à trois voies alimentée par ledit réseau de distribution d'eau et contrôlée par ladite unité de pilotage (5), l'unité de commande (4) comportant deux poussoirs (9,80) commandant chacun une des vannes hydrauliques (6), ledit dispositif de commande hydraulique comportant un deuxième vérin hydraulique (93) à simple effet, alimenté par l'intermédiaire de ladite deuxième vanne et assurant le déclenchement dudit mécanisme d'évacuation d'eau par soulèvement de ladite soupape de fermeture (56), ledit deuxième vérin (93) comportant un piston dont la course est différente de la course du piston dudit vérin (3), de manière que la soupape de fermeture (56) soit soulevée d'une hauteur différente lorsqu'elle est soulevée par ledit deuxième vérin (93) et lorsqu'elle est soulevée par ledit vérin (3).

9. Mécanisme de vidage d'un bac, tel qu'une baignoire, un lavabo, un bidet ou un évier, **caractérisé en ce qu'**il comprend un dispositif de commande hydraulique selon l'une quelconque des revendications 1 à 6.

## Claims

1. Hydraulic actuating device (1) for actuating a water evacuation mechanism (2), said hydraulic actuating device comprising an actuating unit (4) with plunger(s), comprising:
- a control unit (5) that can be integrated with the actuating unit,
- at least one three-way hydraulic valve (6), with an entry channel (33) fed by a water distribution system, an exit channel (34) designed to be connected to the chamber (69) of at least one hydraulic jack, and an exhaust channel (36), said hydraulic valve (6) being controlled hydraulically by the control unit (5), and
- the at least one hydraulic jack being a single-action hydraulic jack and ensuring the raising of a closing valve (56) of a tank of said water distribution system to allow emptying said tank.

2. Hydraulic actuating device according to claim 1, **characterized in that** said hydraulic valve (6) comprises an obturator (47) that can move between a first position in which it allows the circulation of water from said exit channel (34) toward said exhaust channel (36), and a second position in which it allows the circulation of water from said entry channel (33) to said exit channel (34), said hydraulic jack (3) being able to ensure the raising of said closing valve or plug when said obturator is in said second position.

3. Hydraulic actuating device according to claim 2, **characterized in that** said entry channel (33) supplies an actuating channel (24) of said hydraulic valve (6) via a gauge (42), said actuating channel being designed to be connected to the actuating pipe (25) of said hydraulic actuating device, said plunger (9, 15) being able to move between a rest position in which the water that is contained in said actuating pipe can apply to said obturator (47) a pressure that is sufficient to keep said obturator in the first position, and an operating position in which at least a portion of the water contained in said actuating pipe (25) is evacuated from said actuating pipe to allow displacement of said obturator (47) to the second position.

4. Hydraulic actuating device according to claims 3, **characterized in that** it comprises an actuating rod (15), said plunger having an extension (10) supported on one end (15a) of the actuating rod, said actuating rod being elastically pushed toward a rest position corresponding to the rest position of said plunger, said actuating rod being integral in translation with an operating obturator (29), said operating obturator being arranged so as to prevent evacuation of water from a passage (23) in which said actuating pipe discharges when said actuating rod is in the rest position and to allow the evacuation of water from said passage when said actuating rod is in said operating position.

5. Hydraulic actuating device according to claim 3 or 4, **characterized in that** said actuating channel (24) discharges into a first recess (32) of a valve body (31) of said hydraulic valve, an elastic membrane (37) being located in the recess (32) so as to separate the actuating channel (24) from the entry channel (33), the exit channel (34) and the exhaust channel (36), one end of said gauge (42) being housed in an orifice (43) of said membrane (37).

6. Hydraulic actuating device according to claim 5, **characterized in that** said obturator (47) is integral with the gauge (42), the obturator (47) being movable into a second recess (48) of the valve body into which the entry channel (33) discharges, and discharging into the exit channel (34) and the exhaust channel (36), the obturator (47) in the first position being supported on a first edge (50) so as to prevent the circulation of water between the entry channel (33) and said second recess (48), and, in the second position, supported on a second edge (51) so as to prevent the circulation of water between said second recess (48) and the exhaust channel (36).

7. Sanitary flushing mechanism (2), **characterized in that** it comprises a hydraulic actuating device according to any one of claims 1 to 6.

8. Sanitary flushing mechanism (2) according to claim 7, **characterized in that** said flushing mechanism (2) is a double-flushing mechanism, said hydraulic actuating device comprising a second three-way hydraulic valve supplied by said water distribution, system and controlled by said control unit (5), the actuating unit (4) comprising two plungers (7, 80), each actuating one of the hydraulic valves, said hydraulic actuating device comprising a second, single-action hydraulic jack (93) supplied via said second valve and ensuring the triggering of said water evacuation mechanism by raising said closing valve (56), said second jack (93) comprising a piston with a stroke different from the stroke of the piston of said jack (3), in such a way that the closing valve (56) is raised by a different height when it is raised by said second jack (93) and when it is raised by said jack (3).

9. Flushing mechanism for a basin such as a tub, a washbasin, a bidet or a sink, **characterized in that** it comprises a hydraulic actuating device according to any of claims 1 to 6.

## Patentansprüche

1. Hydraulikbetätigungsgerät (1) zum Betätigen eines Wasserevakuierungsmechanismus (2), wobei das Hydraulikbetätigungsgerät eine Betätigungseinheit (4) mit einem oder mehreren Stößeln enthält, umfassend:
- eine Steuerungseinheit (5), verbindbar mit der Betätigungseinheit,
- zumindest ein Dreiwegehydraulikventil (6), mit einem Zugangsweg (33), versorgt durch ein Wasserverteilungsnetz, einem Austrittsweg (34), dazu bestimmt ist mit der Kammer (69) von zumindest einem Hydrauliknonius (3) verbunden zu werden, und einem Entweichweg (36), wobei das Hydraulikventil (6) hydraulisch betätigt ist oder wird durch die Steuereinheit (5),
- wobei der zumindest eine Hydrauliknonius (3) über eine Einfachwirkung verfügt und das Anheben eines Verschlussventiles (56) von einem Reservoir des Wassverteilungsmechanismus zu gewährleisten, um das Entleeren des Reservoirs zu erlauben.

2. Hydraulikbetätigungsgerät gemäß Anspruch 1, **dadurch gekennzeichnet, dass** das Hydraulikventil (6) eine Klappe (47) enthält, beweglich zwischen einer ersten Position, in welcher sie die Wasserzirkulation von dem Austrittsweg (34) hin zu dem Entweichweg (36) ermöglicht und einer zweiten Position, in welche sie die Wasserzirkulation von dem Eingangsweg (33) hin zu dem Austrittsweg (34) ermöglicht, wobei der Hydrauliknonius (3) fähig ist das Anheben des Verschlussventiles oder Spundes zu gewährleisten, wenn die Klappe in der zweiten Position vorliegt.

3. Hydraulikbetätigungsgerät gemäß Anspruch 2, **dadurch gekennzeichnet, dass** der Eingangsweg (33) über ein Kaliber (42) einen Betätigungs- oder Steuerweg (24) des Hydraulikventiles (6) versorgt, wobei der Betätigungsweg oder -pfad dazu bestimmt ist mit dem Betätigungs- oder Steuerschlauch (25) des Hydraulikbetätigungsgerätes verbunden zu werden, wobei der Druckknopf (9, 15) beweglich ist zwischen einer Ruheposition, in welcher das in dem Steuer- oder Betätigungsrohr bzw. -schlauch enthaltene Wasser fähig ist an der Klappe (47) einen Druck auszuüben, um die Klappe in der ersten Position zu halten, und einer Betätigungsposition, in welcher zumindest ein Teil des in dem Steuerrohr oder -schlauch (25) enthaltene Wasser evakuiert wird von dem Steuerrohr, um die Versetzung der Klappe (47) in die zweite Position zu erlauben.

4. Hydraulikbetätigungsgerät gemäß Anspruch 3, **dadurch gekennzeichnet, dass** es einen BetätigungsschaA (15) enthält, wobei der Druckknopf einen Fortsatz (10) aufweist, anliegend an einem Ende (15a) des Betätigungsschafies, wobei der Betätigungsschaft elastisch vorgespannt ist hin zu einer Ruheposition, entsprechend der Ruheposition des Druckknopfes, wobei der Betätigungsschaft tranlatorisch verbunden oder einstückig ist mit einer Bediehnklappe (29), wobei die Bediehnklappe derart angeordnet ist, dass sie eine Evakuierung von Wasser von einem Durchtritt (23), in den der Steuerrohr oder Schlauch mündet, zu verhindern, wenn der Steuer- bzw. Betätigungsschaft in der Ruheposition vorliegt und um die Evakuierung von Wasser von dem Durchtritt zu erlauben, wenn der Betätigungsschaft in der Betätigungsposition ist.

5. Hydraulikbetätigungsgerät gemäß Anspruch 3 oder 4, **dadurch gekennzeichnet, dass** der Betätigungs- oder Steuerweg bzw. -pfad (24) in einer ersten Aussparung (32) eines Ventilkörpers (31) des Hydraulikventiles mündet, wobei eine elastische Membran (37) in der Aussparung (32) angeordnet ist, um den Steuer- bzw. Betätigungsweg bzw. -pfad (24) von dem Eintrittsweg bzw. -pfad (33), dem Austrittsweg bzw. -pfad (34) und den Entweichungsweg bzw. -pfad (36) zu trennen, wobei ein Ende des Kalibers (42) in einer öffnung (43) der Membran (37) aufgenommen ist.

6. Hydraulikbetätigungsgerät gemäß Anspruch 5, **dadurch gekennzeichnet, dass** die Klappe (47) verbunden oder einstückig mit dem Kaliber (42) ist, wobei die Klappe (47) beweglich ist in einer zweiten Aussparung (48) des Ventilkörpers, in welche der Eingangs- oder Eintrittsweg bzw. -pfad (33) mündet und welche in dem Austrittsweg bzw. -pfad (34) und der Entweich- bzw. Entweichungsweg bzw. -pfad (36) mündet, wobei die Klappe (47) in der ersten Position in Anlage vorliegt an einem ersten Rand (50), um eine Wasserzirkulation zu verhindern zwischen dem Eingangsweg oder ₋pfad (33) und der zweiten Aussparung (48) und in der zweiten Position in Anlage an einem zweiten Rand (51), um die Wasserzirkulation zu verhindern zwischen der zweiten Aussparung (48) und dem Entweichungsweg bzw. -pfad (36).

7. Spülmechanismus (2), **dadurch gekennzeichnet, dass** er ein Hydrauliksteuergerät gemäß einem der Ansprüche 1-6 enthält.

8. Spülmechanismus (2) gemäß Anspruch 7, **dadurch gekennzeichnet, dass** der Wasserevakuierungsmechanismus (2) ein Zweivolumenmechanismus ist, wobei das Hydrauliksteuergerät ein zweites Dreiwegehydraulikventil (6) enthält, versorgt von den Wasserverteilungsnetz und betätigt oder gesteuert durch die Steuereinheit (5), wobei die Betätigungseinheit (4) zwei Stößel oder Druckbetätiger (9, 80) enthält, befehligend jeweils eines der Hydraulikventile (6), wobei das Hydraulikbetätigungsgerät einen zweiten Hydrauliknonius (93) mit Einfachwirkung oder einfachem Hub enthält, versorg vermittels des zweiten Ventiles und das Auslösen des Wasserevakuierungsmechanismus durch Anheben des Verschlussventiles (56) gewährleistend, wobei der zweite Nonius (93) einen Kolben enthält dessen Weg unterschiedlich ist von dem Weg des Kolbens des Nonius (3), derart, dass das Verschlussventil (56) angehoben wird, um eine Höhe die jeweils unterschiedlich ist, wenn angehoben durch den zweiten Nonius (93) und wenn angehoben durch den Nonius (3).

9. Behältnisentleerungsmechanismus, wie beispielsweise für eine Badewanne, ein Waschbecken, ein Bidet oder ein Waschtisch, **dadurch gekennzeichnet, dass** er ein Hydraulikbetätigungsgerät gemäß einem der Ansprüche 1-6 enthält.
